(19)

**Europäisches Patentamt**
**European Patent Office**
**Office européen des brevets**

(11) **EP 3 785 002 B1**

(12) **EUROPEAN PATENT SPECIFICATION**

(45) Date of publication and mention
of the grant of the patent:
**08.07.2026 Bulletin 2026/28**

(21) Application number: **19724949.3**

(22) Date of filing: **26.04.2019**

(51) International Patent Classification (IPC):
**G01M 3/28** *(2006.01)*   **E21B 47/10** *(2012.01)*

(52) Cooperative Patent Classification (CPC):
**G01M 3/2815; E21B 47/117; G01M 3/2892**

(86) International application number:
**PCT/NO2019/050095**

(87) International publication number:
**WO 2019/209121 (31.10.2019 Gazette 2019/44)**

(54) **METHOD OF TESTING AN INTEGRITY OF A STRUCTURE SEPARATING A CHAMBER FROM AN ADJACENT ENVIRONMENT, AND RELATED APPARATUS**

VERFAHREN ZUR PRÜFUNG DER INTEGRITÄT EINER STRUKTUR, DIE EINE KAMMER VON EINER BENACHBARTEN UMGEBUNG TRENNT, UND ZUGEHÖRIGE VORRICHTUNG

PROCÉDÉ DE TEST DE L'INTÉGRITÉ D'UNE STRUCTURE SÉPARANT UNE CHAMBRE D'UN ENVIRONNEMENT ADJACENT, ET APPAREIL ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.04.2018 NO 20180592**

(43) Date of publication of application:
**03.03.2021 Bulletin 2021/09**

(73) Proprietor: **Scanwell Technology AS**
**4033 Stavanger (NO)**

(72) Inventor: **KVERNVOLD, Morten**
**4018 STAVANGER (NO)**

(74) Representative: **Håmsø Patentbyrå AS**
**P.O. Box 9**
**4068 Stavanger (NO)**

(56) References cited:
**WO-A1-2017/111608     US-A1- 2017 023 435**

• **RAJ MRUDHUL ET AL: "Well Integrity - Christmas Tree Acceptable Leakage Rate and Sustained Casing Pressure", 24TH SYMPOSIUM ON HAZARDS (HAZARDS 24), SYMPOSIUM SERIES 159, 9 May 2014 (2014-05-09), pages 1 - 13, XP055602717, Retrieved from the Internet <URL:https://www.icheme.org/media/8920/ xxiv-paper-26.pdf> [retrieved on 20190705]**

## Description

Field of invention

The present invention relates to the field of integrity testing, and in particular, it relates to a method of testing an integrity of a structure which separates a chamber from an adjacent environment, and related apparatus. In certain embodiments, such a structure is tested as to what extent it may withstand a fluid leakage from the environment into the chamber.

Background

In a wide range of contexts, it can be important to check that a structure is of the necessary integrity for its intended purpose, e.g. before it is brought into normal operational use or as part of regular operational testing or troubleshooting. One such example may be a structure of a wellbore, such as a portion of a pipe in the wellbore which may be intended to separate an environment on one side of the pipe from a region inside the pipe.

A "structure" in this context may typically be what in the petroleum-extraction industry may commonly be referred to as a "well barrier" - an envelope of one or more well barrier elements separating a chamber in a well from one or more adjacent environments. A well barrier element may be defined as a component part of a well designed to prevent fluids from flowing unintentionally from e.g. an adjacent formation, an annulus or a chamber in a production tubing into e.g. another formation, another chamber or a surface.

"Fluid" in this context may include both liquid and gas.

In order to verify that the structure is suitable and adequately isolates against the adjacent environment, it may be necessary to perform a test. In the oil and gas exploration and production industry, it is known to perform a so-called "inflow pressure test" on a structure to determine if there is a leak of fluid through a part of a structure, the part typically being referred to as a "barrier element". Such tests may identify whether the structure leaks or not when subjected to a pressure differential, and therefore it may be inferred from the test whether the structure has sufficient integrity.

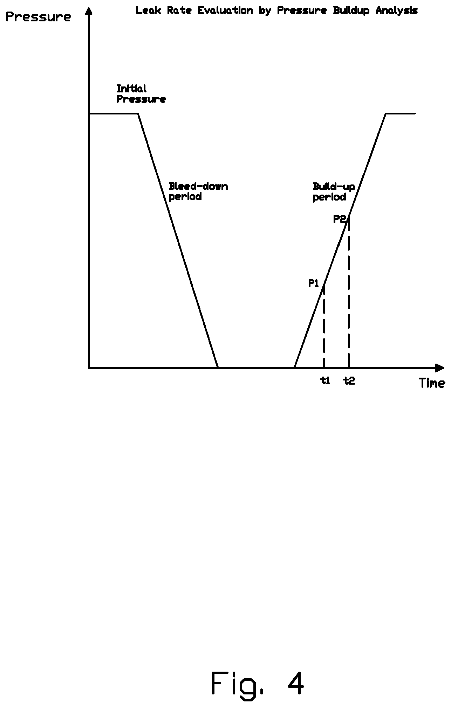

A first type of inflow pressure test known from prior art may be referred to as a leak-metering by pressure-buildup-analysis test. The graph in figure 4 illustrates how the first type of inflow pressure test is performed by illustrating a simplified example of how the pressure in a chamber may typically change over time during such a test and at what stage metering is performed:

The chamber has an initial pressure which is reduced over a significant period of time by bleeding down the pressure (bleed down period) by allowing fluid to flow through an open bleed valve, so as to create a pressure differential in the chamber compared to a surrounding environment. The surrounding environment may e.g. be an annulus, a formation, a lower pipe section, etc.

The chamber is subsequently closed off by closing the bleed valve. If there is a leak through the structure during the period when the chamber is closed off, the pressure in the chamber will typically increase over time (in the build up period). The pressure in the chamber is monitored to register the pressure increase over a period of time, and the leak rate based on a calculation including dividing change of pressure on the period of time ($\Delta P/\Delta t$).

The first type of inflow pressure test is inefficient, as it requires considerable reduction of pressure in the chamber followed by a period of monitoring of pressure further followed by a period of pressure build-up, before normal operation can commence. As a chamber being tested can be very large, the pressure bleed down and pressure build up periods can be very time consuming. In some cases, the bleed down period can last more than 24 hours.

This kind of inflow test is further explained in the publication SPE 117961 titled "Design and Fabrication of a Low Rate Metering Skid to Measure Internal Leak Rates of Pressurized Annuli for Determining Well Integrity Status", published by Society of Petroleum Engineers in 2008.

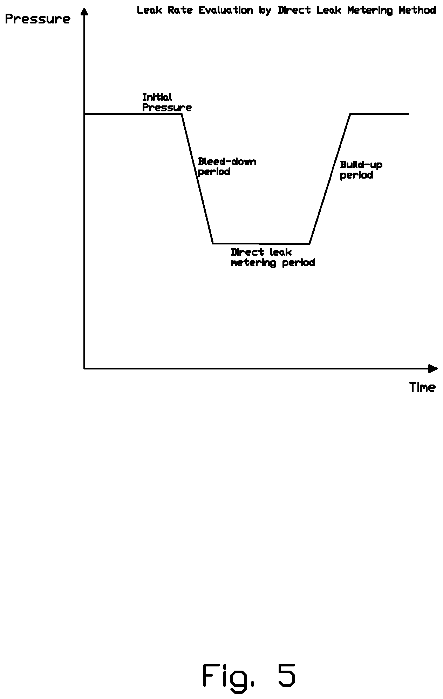

A second type of inflow pressure test may typically be known as a leak rate evaluation by direct leak metering method. The graph shown in figure 5 illustrates how the second type of inflow pressure test is performed by illustrating how the pressure in a chamber may typically change over time during such a test, and at what stage metering is performed.

As in the first type of inflow test, a bleed valve is opened to bleed down the pressure in the chamber during a bleed down period. However, in this second type of inflow test, the bleed down period is shorter, and a constant differential pressure across the structure, between the chamber and the adjacent environment(s) is kept for a subsequent period of time. During this period of constant differential pressure, a flow path is kept open to allow fluid to flow from the chamber through a flow meter. As the differential pressure is kept constant, the fluid that flows through the flow meter provides information on the flow rate of fluid into the chamber in a leak. Under certain conditions, flow rate through the flow meter equals or at least approximates flow rate into the chamber through the leak.

This test may be advantageous over the first type under certain conditions, as the bleed down period and a subsequent pressure build up period may typically be shorter. However, despite the periods being shorter, they still require a considerable amount of time. This method may be challenging in wellbores where the fluid in the chamber/in the flow comprises a multiphase mixture of gas and liquid.

The second type of test is described in WO 2010151144 A1.

Both the above-mentioned tests may suffer from having to lower the pressure of the chamber significantly prior to obtaining results for determining the condition of the structure. Having to reduce the pressure of the chamber can be undesirably time consuming, particularly if the volume of the chamber and the present gas volume is large.

An object of the invention is to remedy or to reduce at least one of the drawbacks of prior art.

Summary of the invention

According to a first aspect of the invention, there is provided a method of testing an integrity of a wellbore structure according to claim 1.

The structure may e.g. be a well barrier comprising one or more well barrier elements. The method of testing the integrity of the structure may be a method of testing the integrity of a particular well barrier element or of the well barrier. The adjacent environment may e.g. be a formation, an annulus, a lower portion of a production tubing, etc.

The period of letting out gas from the chamber in a flow may typically be referred to as a "bleed down period".

The method may be a method of testing an integrity of a structure separating a chamber from an adjacent environment, wherein the method comprises the steps of:

> a. letting out gas from the chamber in a flow through a flow line, increasing a pressure differential between the chamber and the adjacent environment, during a bleed down period;
> b. using at least one sensor to obtain at least one parameter associated with the flow or a condition of gas in the flow line during the bleed down period;
> c. determining whether fluid has entered the chamber during the bleed down period, and/or determining a rate of fluid entering the chamber during the bleed down period, using the obtained parameter, the determination being based on the amount of gas that has left the chamber.

The method may be advantageous compared to the prior art as the data used to determine if fluid has entered the chamber and/or to determine a rate of fluid entering the chamber, and/or the determinations may be performed during the bleed down period. As soon as enough information has been obtained and/or determined, the bleed down may be stopped and actions may be undertaken to return to normal operations, e.g. re-building the pressure in the chamber to restart production. The invention thus provides a more efficient method of performing an inflow pressure test compared to prior art.

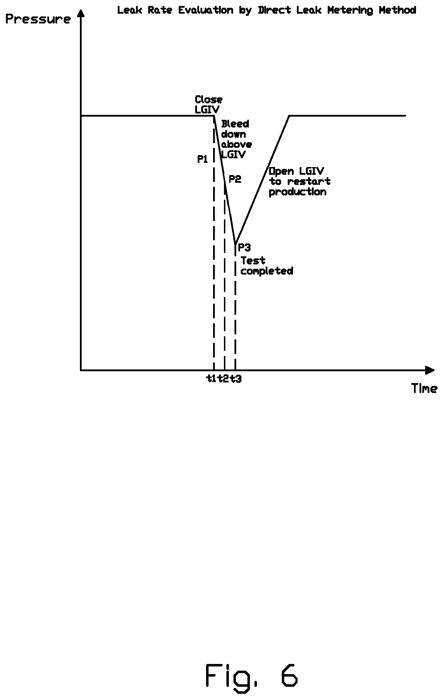

The graph shown in figure 6 illustrates how the pressure development may be in a chamber during and after a test according to the first aspect of the invention, and when during the test the parameters used in the determinations are obtained:

As can be seen in the illustration, and as previously discussed, the parameters are obtained during a pressure bleed down period, and the test can thus be completed in significantly shorter time compared to the time required to perform inflow pressure tests known from prior art.

A valve may be used to control the pressure in the chamber. The valve will typically be closed prior in a preparatory phase and opened to allow gas to flow from the chamber as the test is started. During the preparatory phase, initial parameters used for later calculations to determine the condition of the structure may be determined. At least one step of the method may be performed while lowering a fluid pressure in the chamber. A plurality and/or all the steps of the method may be performed while lowering the pressure in the chamber.

The parameter may be a pressure of the gas in the flow. The parameter may be obtained by use of a pressure sensor placed in fluid communication with the flow line.

The parameter may be a rate of flow through the flow line. The parameter may be obtained by use of a flow rate sensor placed in fluid communication with the flow line.

The parameter may be a temperature of the gas. The parameter may be obtained by use of a temperature sensor placed in fluid communication with the flow line.

The parameter may be a density of the gas. The parameter may be obtained by use of a gas density sensor placed in fluid communication with the flow line.

The parameter may be another parameter providing relevant information with regards to the fluid, obtained by a suitable means of obtaining said parameter.

A plurality of parameters may be obtained. The plurality of parameters may comprise any one of or a plurality of a pressure of the gas, a flow rate of the flow, a temperature, gas composition and/or any other parameter that may be used to determine whether a fluid has entered the chamber and/or to determine a rate of fluid entering the chamber.

The structure may e.g. be a portion of a pipe of a wellbore. The adjacent environment may be an annulus, a centre pipe, a formation or another environment. The structure may otherwise be e.g. at least a portion of a pipeline or at least a portion of a fluid container such as a tank.

An initial mass of gas in the chamber, $m_i$ may be calculated using the following formula:

$$m_i = \frac{P_i * V_i * MW}{Z_i * R * T_i}$$

where:

$m_i$ = initial mass of the gas in the chamber;
$P_i$ = initial pressure in the chamber;
$V_i$ = initial gas volume in the chamber;
$MW$ = molecular weight of the gas in the chamber;
$Z_i$ = initial compressibility of the gas in the chamber;
$R$ = rankine constant; and
$T_i$ = initial temperature of the gas in the chamber.

A current mass of gas in the chamber may be calculated using the following formula:

$$m_c = \frac{P_c * V_c * MW}{Z_c * R * T_c}$$

where:

$m_c$ = current mass of the gas in the chamber
$P_c$ = current pressure in the chamber;
$V_c$ = current gas volume in the chamber;
$MW$ = molecular weight of gas;
$Z_c$ = current compressibility of the gas in the chamber;
$R$ = rankine constant; and
$T_c$ = current temperature of the gas in the chamber.

A mass of gas having leaked through the barrier may be calculated using the following formula:

$$m_l = m_c - m_i + m_p$$

where:

$m_l$ = mass of gas having leaked into the chamber;
$m_c$ = current mass of the gas in the chamber;
$m_i$ = initial mass of the gas in the chamber; and
$m_p$ = mass of gas produced.

The step of obtaining the parameter or parameters may be performed a plurality of times. The plurality of times may be spread out over a time interval.

The above-mentioned calculations may be repeated for each of the plurality of times the parameter or parameters are determined. By determining the parameters and making the calculations a plurality of times over a time interval, it may be possible to perform a dynamic leak metering, and/or it may be possible to see if a leak rate changes as a pressure differential changes.

A pressure response for a theoretical zero-leak situation may be calculated using the following formula:

$$P_{zl} = \frac{[m_i - m_p] * Z_c * R * T_c}{V_c * MW}$$

where:
$P_{zl}$ = pressure response with zero leak through the barrier.

The theoretical pressure response, $P_{zl}$, may be used to compare to a pressure response determined from the determined parameters. It may be possible to use a value determined from the comparison to deduce and/or calculate if there is a leak into the chamber and, if there is a leak, to quantify the leak.

The fluid in the chamber may comprise a gas and a liquid. The amount of liquid in the chamber may be determined. To determine the amount of liquid in the chamber, an acoustic measuring device may be used. The acoustic measuring device may be used to determine a gas-liquid contact in the chamber. The gas-liquid contact in the chamber defines the height of a liquid column in the chamber and may thus be used as a parameter to determine the volume of liquid in the chamber.

The information gathered from determining the amount of liquid in the chamber may be used to determine an amount of gas in the chamber, and/or to determine an amount of gas and/or liquid which has entered the chamber in a leak in a barrier of the structure from an exterior of the structure into the chamber. By knowing the total volume of the chamber and the height and volume of a liquid column in the chamber, the remaining volume occupied by a gas can be determined.

The step of determining an amount of liquid in the chamber may be performed a plurality of times over a time interval. The plurality of times may include at least once prior to letting out gas from the chamber in a flow, and/or at least once while letting out gas from the chamber in a flow, and/or at least once after having let out gas from the chamber in a flow. Determining the amount of liquid a plurality of times over a time interval may be advantageous to determine if the amount of liquid in the chamber changes over time, e.g. to determine if there has been an influx of liquid into the chamber over the time interval.

The volume in the chamber and/or of gas in the chamber and/or of liquid in the chamber may be known. If one of the volumes is not known, in some cases an approximate volume based on assumptions may be sufficient for sufficiently accurate analyses. If an approximate based on assumptions does not suffice, e.g. if unknown factors makes an assumed approximation likely to be inaccurate, the volume of gas, liquid and/or of the chamber may be determined by use of a method and apparatus of determining said volume or volumes acoustically and/or by use of an alternative, suitable method and apparatus.

According to a second aspect of the invention, there is provided an apparatus according to claim 12.

The apparatus may be an apparatus for performing the method according to the first aspect of the invention. The apparatus is advantageous over known apparatuses as it may be used to test the integrity of a wellbore structure comprising a chamber, while lowering the pressure in the chamber, and thus allowing for obtaining results in significantly shorter time than known apparatuses for testing integrity of a structure comprising a chamber, e.g. apparatuses for performing known inflow pressure tests. The apparatus allows for integrity testing in real-time.

The apparatus may comprise a pressure sensor and/or a flow meter. The determiner may comprise a computer device for performing calculations to determine whether fluid has entered the chamber and/or determining a rate of fluid entering the chamber.

The apparatus may comprise the structure. The pressure sensor and the flow meter may be in fluid communication with the chamber.

The apparatus may further comprise a temperature sensor for determining a temperature and an acoustic measuring device for determining a gas-liquid contact.

The apparatus may further comprise a computer device.

The structure may comprise a portion of a pipe of a wellbore.

According to a third aspect of the invention, there is provided a computer program according to claim 13, for performing the method according to the first aspect of the invention.

According to a fourth aspect of the invention, there is provided a computer device according to claim 14, for use in performing the method according to the first aspect of the invention. The computer device comprises at least one processor configured to execute the computer program according to the third aspect of the invention.

According to a fifth aspect of the invention, there is provided a storage medium according to claim 15, containing the computer program according to the third aspect of the invention.

Description and drawings

There will now be described, by way of example only, embodiments of the invention, with reference to the accompanying drawings, in which:

Figure 1    shows a schematic representation of an apparatus for testing an integrity of a structure according to an embodiment of the invention;

Figure 2    shows a schematic representation of an apparatus for testing an integrity of a structure according to another embodiment;

Figure 3    shows a graph illustrating results from use of the apparatus of Figure 1 or 2, including a calculated theoretical zero-leak pressure response, a determined pressure response from a leak test, a mass leak rate and a volumetric leak rate;

Figure 4    shows a graph illustrating how the first type of inflow pressure test from prior art is performed by illustrating a simplified example of how the pressure in a chamber may typically change over time during such a test and at what stage metering is performed;

Figure 5    shows a graph illustrating how the second type of inflow pressure test from prior art is performed by illustrating how the pressure in a chamber may typically change over time during such a test, and at what stage metering is performed; and

Figure 6    shows a graph illustrating how the pressure development may be in a chamber during and after a test according to the first aspect of the invention, and when during the test the parameters used in the determinations are obtained.

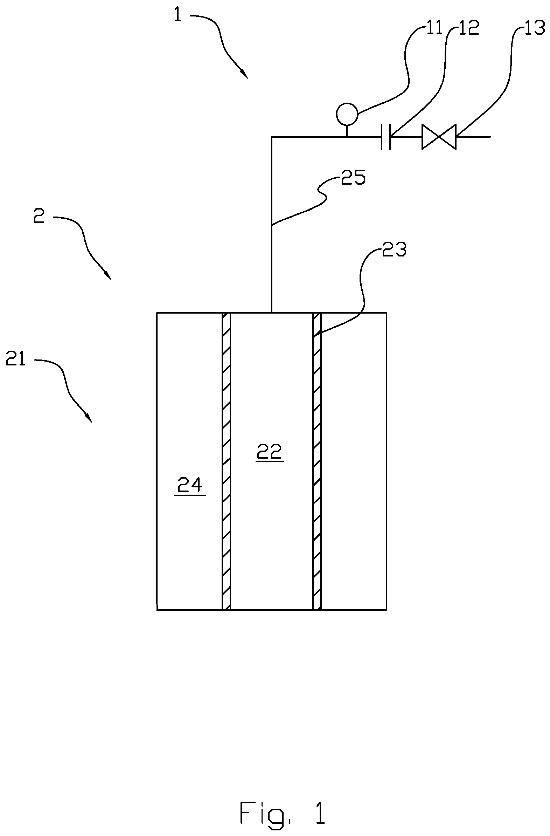

Figure 1 shows an apparatus 1 for testing the integrity of the structure 2. More particularly, the apparatus 1 is used to determine if there is a leak through a part of the structure 2, and it is used to determine an amount of fluid leaking through the part of the structure 2 per unit time.

The structure 2 forms a chamber 22, which in this embodiment is a first portion 22 of a wellbore 21 of a petroleum well. The structure 2 comprises a barrier 23 for separating the chamber 22 from an adjacent environment, in this embodiment a second portion 24 of the wellbore 21. The chamber 22 contains a fluid including a gas. The apparatus 1 is employed to determine if there is a leak associated with the barrier 23.

A pipe 25 forms a flow path for the gas from the chamber 22 to a receiving end (not shown) for receiving the gas. There is a pressure differential between the chamber 22 and the receiving end. The pressure in the chamber 22 is higher than the pressure in the receiving end, such that a flow of gas through the pipe 25 can be directed from the chamber 22 to the receiving end.

The receiving end has for example a closed drain system, a tank, a flaring system, a process plant, or other low-pressure receiver.

The apparatus 1 has a valve 13 placed in the pipe 25 for blocking or opening the flow path. Furthermore, the apparatus has a pressure sensor 11 for determining the pressure of the fluid in the chamber 22, and a flow meter 12 for determining a rate of flow of gas from the chamber 22, both placed in the pipe 25.

The purpose of the apparatus 1 in this embodiment is mainly to determine if there is a leak of fluid from the second portion 24 into the chamber 22 and to determine a flow rate of fluid from the second portion 24 into the chamber 22 if there is a leak.

A method of testing the integrity of the structure 2, using the apparatus 1, is performed as follows.

The structure 2 forms the chamber 22, and initially the valve 13 is closed. The chamber 22 is therefore a closed volume containing the gas. The pressure sensor 11 determines an initial pressure of the gas in the chamber 22.

The valve 13 is then opened. Gas is let out of the chamber 22 and is conveyed in a flow along the pipe 25 toward the receiving end. The flow rate of the gas in the flow is obtained and pressure obtained from the pressure sensor 11 on a continuous basis while the gas is being let out of the chamber 22 and flows through the pipe 25.

By making use of the measured flow rate and pressure, it is then determined as to whether a leak has occurred. The rate of leakage is determined if there is found to be a leak. These "leak" determinations are based upon the amount of gas that has left the chamber 22 at a given "later" point in time, after opening the valve 13 and letting out gas from the chamber 22.

The leak determinations are made in this example through determining the mass of gas (i.e. an amount of gas, $m_l$) that has leaked into the chamber 22 by applying the following formula:

$$m_l = m_c - m_i + m_p$$

where:

> $m_l$ = mass of gas having leaked into the chamber 22 ;
> $m_c$ = current mass of the gas in the chamber 22 at the later point in time;
> $m_i$ = initial mass of gas in the chamber 22; and
> $m_p$ = mass of produced gas.

Each of the variables on the right hand side of the above equation are determined and combined to obtain the desired quantity ($m_l$), as explained now further.

*Initial mass*

This is the mass of the total amount of the gas that is contained in the chamber 22 before the valve 13 is opened. The initial mass of gas $m_i$ may be determined by use of the following formula:

$$m_i = \frac{P_i \ast V_i \ast MW}{Z_i \ast R \ast T_i}$$

where:

> $m_i$ = initial mass of a gas in the chamber 22;
> $P_i$ = initial pressure in the chamber 22;
> $V_i$ = initial gas volume in the chamber 22;
> $MW$ = molecular weight of the gas in the chamber 22;
> $Z_i$ = initial compressibility of the gas in the chamber 22;
> $R$ = rankine constant; and
> $T_i$ = initial temperature in the chamber 22.

An operator generally knows the volume of the chamber 22 as this is dictated by the physical design of the structure 2 being investigated. The initial pressure from the pressure sensor 11 is used to determine the initial mass of gas in the chamber 22. The initial pressure $P_i$ is obtained from the pressure sensor 11. The initial gas volume in the chamber 22 the molecular weight of the gas in the chamber 22, the initial compressibility of the gas in the chamber 22 are also generally known to the operator, as is the initial temperature $T_i$ in the chamber 22.

The variables discussed above can be determined if not known. The initial temperature $T_i$ can be determined by use of a temperature sensor. The initial gas volume $V_i$ can be determined from determining or knowing the total volume of the chamber 22 and determining a gas-liquid contact in the chamber 22 by use of an acoustic measuring device. The molecular weight $MW$ and the initial compressibility of the gas $Z_i$ can be determined by use of a gas chromatograph. A skilled person will understand that other methods of obtaining the variables than those mentioned may be used to obtain the variables.

As can be appreciated, any measurements that are dependent upon live conditions, such as for example the temperature measurement, initial pressure, and the amount of the gas that is fed into the chamber 22 to prepare it for the test are made in a preliminary stage, before opening the valve 13 to let out of the chamber 22 through the pipe 25.

*Produced mass*

When the initial mass of the gas and the initial pressure have been determined, the valve 13 is opened and gas flows from the chamber 22. As a result of the flow of gas from the chamber 22, pressure drops over time. The gas that leaves the chamber 22 and flows through a section of the pipe 25 is referred to as "produced gas".

The mass (i.e. amount) of produced gas can be determined by use of the following formula:

$$m_p = \overline{Q_p} \ast \overline{\partial_p} \ast \Delta t$$

where:

> $m_p$ = mass of produced gas;
> $\overline{Q}$ = average gas flow over a period of time;
> $\overline{\partial_p}$ = average density of produced gas over the period of time; and
> $\Delta t$ = period of time.

Over a period of time, the gas flow is determined and recorded by use of the flow meter 12. Other means for determining the flow are in other embodiments used instead of the flow meter 12.

The pressure is determined and recorded by use of the pressure sensor 11, and the determined pressure is used to determine the density of produced gas. Together with the determined density, the determined gas flow is used to determine a mass of produced gas, i.e. gas that has moved from the chamber 22 through the flow meter 12, at a certain point in time, a period of time after opening the valve 13.

*Current mass*

The current mass of gas in the chamber 22 at the later point in time can be determined similarly to how the initial mass, with current, rather than initial, values for the variables in the formula:

$$m_c = \frac{P_c * V_c * MW}{Z_c * R * T_c}$$

The current values for the variables can be determined by use of previously mentioned methods, or they can, in some cases, be assumed. E.g. the temperature in the chamber 22, the molecular weight, the compressibility and the volume of gas may be assumed to stay substantially constant during the course of a test.

The current mass of gas in the chamber 22 refers to the mass of gas at the later point in time after the method is initiated and gas is flowing or has flowed out of the chamber 22 through the pipe 25.

The pressure continuously being measured from the pressure sensor 11 gives the pressure $P_c$.

*Leak determination*

In light of the above, by finding the initial mass of gas in the chamber 22, the mass of produced gas, and the current mass of gas in the chamber 22, the mass $m_l$ is readily obtainable and it is therefore possible to deduce if there has been a leak of gas into the chamber 22 and to quantify such a leak, e.g. obtain the leak rate

The presence of the leak may be determined as follows. If there is a positive value obtained for the mass $m_l$, then there is a leak. If the leak value is above a predefined threshold, then it could be inferred from the leak value that the structure 2 is not of sufficient integrity, i.e. it fails the test.

From the determined mass $m_l$, the leak rate can be found by use of the following formula:

$$\overline{Q_l} = \frac{m_l}{\overline{\partial_l} * \Delta t}$$

where:

> $\overline{Q_l}$ = average leak rate of gas into the chamber 22 over a period of time;
> $m_l$ = mass of gas having leaked into the chamber 22;
> $\overline{\partial_l}$ = average density of gas having leaked into the chamber 22 over the period of time;
> $\Delta t$ = period of time.

In some variants, the calculations are automated. Recorded data and/or parameters from the flow meter 12 and the pressure sensor 11 are fed as input data to a computer device 17, and the computer device uses the data to perform the necessary determinations and/or analysis to find if there is a leak into the chamber 22 and/or quantify the leak rate if there is a leak.

In some variants of the method, a dynamic leak metering may advantageously be achieved. Depending on the case in question, the leak rate may change as a differential pressure between the chamber 22 and the second section 24 changes as gas flows from the chamber 22 and the pressure in the chamber 22 drops. By taking measurements of flow rate and pressure repeatedly and/or continuously, the leak rate development over time can be determined.

The determined pressure development can be compared to a modelled pressure development, to determine a characteristic of an inflow into the chamber 22 from the second portion 24. The modelled pressure development can be a calculated pressure development given a determined leak rate in a no-inflow scenario. The comparison of the determined pressure development to the modelled, no-inflow scenario, pressure development could give a clear indication of whether or not there was an inflow of fluid into the chamber 22, and possibly also a rate of leak into the chamber 22.

Note that other devices may be used to obtain data than those mentioned as part of the apparatus described above with reference to Figure 1. It is possible to determine the gas flow from the chamber 22 by other means than by use of a flow meter 12. The density of the gas may be determined e.g. by use of a density sensor. The temperature may be determined e.g. by use of a temperature sensor. The compressibility and/or the molecular weight of the gas may be determined e.g. by use of a gas chromatograph. The volume of gas and/or liquid in the chamber 22, the temperature, the compressibility and/or the molecular weight may in many cases be readily available and known to an operator e.g. from earlier knowledge about or earlier operations performed at the site.

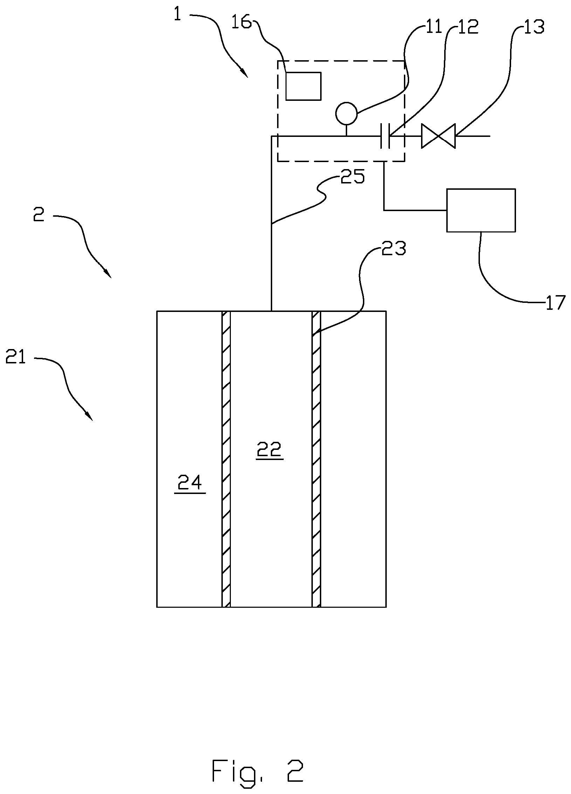

In Figure 2, another variant of the apparatus 1 has an acoustic measuring device 16 for determining a gas-liquid contact in the chamber 22 in a case where it is expected that the chamber 22 not only contains gas, but also contains liquid, and/or that the inflow fluid can contain liquid. Nevertheless, the technique as described above in relation to Figure 1 can still be used in the scenario of Figure 2.

By way of the acoustic measuring device 16, the apparatus 1 can be used to determine an inflow of fluid where the fluid is at least partly in liquid form. The acoustic measuring device 16 is used to determine where in the chamber 22 the gas-liquid contact is, to determine the volume of the liquid to determine the volume of the gas. The volume of gas in the chamber 22 will then be the total volume of the chamber 22 minus the volume of the liquid.

The acoustic measuring device 16 may be used a plurality of times over a time interval to determine if and potentially how the gas-liquid contact in the chamber 22 changes over time. The information gathered from the plurality of times the acoustic measuring device 16 may be used to determine a leak rate of liquid into the chamber 22, and/or for more accurately calculating the leak rate of gas into the chamber 22.

Furthermore, the apparatus 1 of Figure 2 includes a computer device 17 for making calculations using the data obtained by using the pressure sensor 11, the flow meter 12 and the acoustic measuring device 16. The computer device 17 is connected to the pressure sensor 11, the flow meter 12 and the acoustic measuring device 16 for receiving data therefrom.

The computer device 17 has a storage medium (not shown) for storing a computer program for performing the calculation using the data. The program is executed by the processor of the computer and determines whether fluid has entered the chamber 22 in the form of a leak and determines the rate of entry of any such fluid that has enters the chamber 22.

Embodiments of the invention can be advantageous in that they may avoid needing to lower pressure in the chamber 22 to the same degree as in the inflow pressure tests of the prior art. In particular, parameters can be obtained from the sensors 11, 12 whilst gas is let out of the chamber 22, such that results may be obtained more quickly. For example, a leak may be revealed and quantified continuously from the moment that the gas is let out of the chamber 22 in the flow.

It can be advantageous in various embodiments of the invention to determine the temperature of the gas, as it is a parameter of the above-mentioned formulas for determining mass. The temperature can be determined if it is not known by an operator initially and/or if it may change during an execution of the method. Likewise, it may be advantageous to determine at least one of: a molecular weight of the gas; and a compressibility of the gas. Either one of, or both of the molecular weight of the gas and the compressibility may be determined by use of a gas chromatograph. The molecular weight of the gas and the compressibility of the gas are variables in the formulas mentioned above. The variables may be known by an operator, but may be determined if the variables are not known. The gas composition of the gas in the volume may change during an execution of the method, which may result in a change of the molecular weight and compressibility. Therefore, if there is a risk of the gas composition changing during an execution of the method, the molecular weight and the compressibility of the gas could advantageously be determined as part of the step of obtaining the parameter of the gas of the flow.

The method described above may be advantageous compared to prior art, as it may be carried out and even completed while lowering the pressure in the chamber 22, without any preparatory lowering of the pressure prior to obtaining relevant parameters to determine the condition of the structure. The pressure drop in the chamber 22 during the test may typically be lower than in prior art tests, and the pressure build-up needed after completing the test may typically be lower. Thus, an integrity test may be completed in significantly less time than in the prior art.

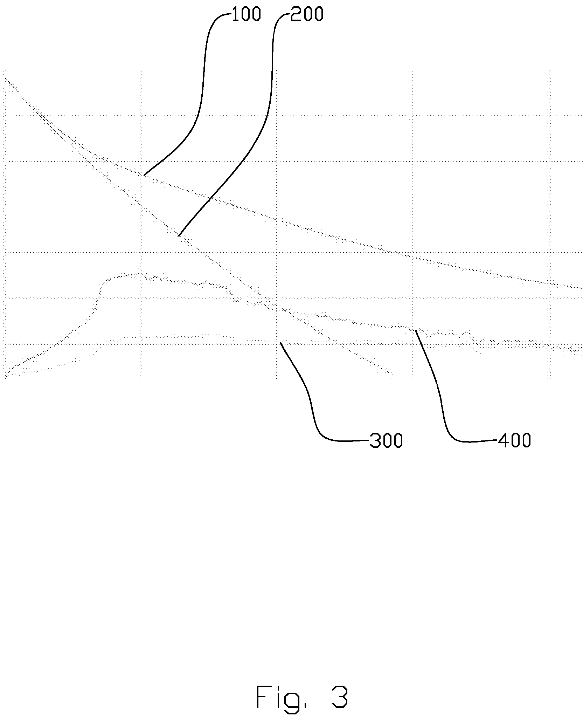

Figure 3 shows a graph illustrating a calculated theoretical zero-leak pressure response 200, a determined pressure response 100 from a leak test, a mass leak rate 400 and a volumetric leak rate 300 from a test case wherein a method as described in relation to Figures 1 or 2 was applied and used to detect the presence of a leak and determine the mass of material leaked. Such a graphical representation of the data may be used as part of the method to present obtained data, to illustrate clearly if there is a leak, the rate of the leak, and how the leak rate changes over time as the pressure of the fluid in the chamber 22 changes. Figure 3 further illustrates that it may be possible to determine early whether there is a leak and whether said leak is of a rate that is not accepted according to industry standards early, while the pressure in the chamber 22 is being reduced.

Whether there is a leak may become apparent just by comparing the determined pressure response 100 to the calculated theoretical zero-leak pressure response 200. As shown in Figure 3, there can be a significant, clear difference between the theoretical pressure response 200 and the determined pressure response 100.

Although the apparatus 1 described above and shown in Figures 1 and 2 comprises both a pressure sensor 11 and a flow meter 12 for obtaining parameters associated with the flow or a condition of gas in the flow, the method may be performed using only one sensor 11, 12 for obtaining such a parameter.

Given that the flow from the chamber 22 through the pipe 25 is restricted to a known flow rate, e.g. by use of a type of flow-restricting device (not shown), it is enough in some variants to obtain information on the pressure of fluid in the chamber and/or gas in the flow by use of a pressure sensor 11 to be able to determine whether fluid has entered the chamber 22.

It may also be possible to determine whether fluid has entered the chamber 22 by using a flow meter 12 only, without using a pressure sensor 11. This may be done, e.g. if a pressure downstream of the flow meter 12 is known and substantially constant. It may then be possible to deduce an expected development of flow through the flow meter 12 for a theoretical scenario where there is no inflow into the chamber 22. A comparison of expected development of flow to a flow measured by use of the flow meter 12 may then be used to determine whether fluid has entered the chamber 22. It should be noted that the above-mentioned embodiments illustrate rather than limit the invention, and that those skilled in the art will be able to design many alternative embodiments without departing from the scope of the appended claims.

Methods of determining parameters of a fluid, such as pressure, gas volume, molecular weight of a gas, compressibility of a gas, temperature of a gas, mass of a gas, and more, that may be relevant for the method according to the invention, that are not mentioned in this text, that are known to a skilled person, or that will in the future be known to a skilled person, may be performed as part of the method according to the invention. The invention is not restricted to the specific methods of obtaining said parameters mentioned in this text.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

**Claims**

1. A method of testing an integrity of a wellbore structure (2), the wellbore structure separating a chamber (22) of the wellbore from an adjacent environment, the method comprising the steps of:

   a. operating at least one valve (13), letting out gas from the chamber in a flow, thereby increasing a pressure differential between the chamber and the adjacent environment;
   b. using at least one sensor (11, 12) to obtain at least one parameter associated with said flow or a condition of gas in said flow; and
   c. determining whether gas has entered the chamber , the gas entering after letting at least some of the gas out and increasing the pressure differential in step a, using the obtained parameter, the determination being based on the amount of gas that has left the chamber; and
   d. determining a rate of the gas influx into the chamber in step a, using the obtained parameter, the determination being based on the amount of gas that has left the chamber.

2. The method according to claim 1, wherein the determination in either or both step c and step d is performed in the course of performing step a, or subsequently by analysing acquired data.

3. The method according to claim 1 or claim 2, wherein step a further comprises reducing gas pressure in the chamber.

4. The method according to any one of the preceding claims, wherein the determination in either or both step c and step d further comprises evaluating the amount of gas that has left the chamber.

5. The method according to any one of the preceding claims, wherein the determination in either or both step c and step d is further based on the amount of gas remaining in the chamber after said amount of the gas has left the chamber in the flow.

6. The method according to any one of the preceding claims, wherein the method further comprises determining an amount of gas which has entered the chamber in a leak in a barrier of the structure, from an exterior of the structure into the chamber.

7. The method according to claim 6, wherein the determination of the amount of gas which has entered the chamber in the leak comprises calculating, determining, or estimating a mass of a gas that has leaked through the barrier portion in the structure using a linear combination of a current mass of gas in the chamber, an initial mass of gas in the chamber, and a mass of the gas that is produced by the gas leaving the chamber in the flow.

8. The method according to any one of the preceding claims, wherein the step of obtaining the parameter or parameters is performed a plurality of times.

9. The method according to claim 8, which further comprises performing a plurality of calculations using the parameter or parameters obtained the plurality of times, to determine how a leak rate changes over time.

10. The method according to any one of the preceding claims, which further comprises:

    calculating a pressure response for a theoretical zero-leak situation; using the sensor to determine at least one pressure of the gas in the flow from the chamber;
    comparing the calculated response for the theoretical zero-leak situation to the determined pressure response obtained by use of a pressure sensor; and
    using the comparison to determine a condition of the structure.

11. The method according to any one of the preceding claims, which further comprises determining an amount of liquid in the chamber.

12. Apparatus (1) for use in testing an integrity of a wellbore structure (2), the wellbore structure separating a chamber (22) from an adjacent surrounding environment, the apparatus comprising:

    at least one flow line section for containing a flow comprising gas from the chamber;
    at least one valve which is operable for letting out gas from the chamber in the flow to increase a pressure differential between the chamber and the adjacent environment;

at least one sensor for obtaining at least one parameter associated with said flow or a condition of gas in said flow; and

at least one determiner configured to use the obtained parameter for: determining whether gas has entered the chamber, the gas entering after letting out at least some of the gas from the chamber and increasing the pressure differential, the determination being based on the amount of gas that has left the chamber; and determining a rate of the gas influx into the chamber, the determination being based on the amount of gas that has left the chamber.

13. A computer program for use in performing the method of any of claims 1 to 11 , wherein the computer program comprises machine readable instructions for performing steps c and d of claim 1.

14. A computer device (17) for use in performing the method of any of claims 1 to 11, the computer device comprising at least one processor, the processor being configured to execute the computer program of claim 13.

15. A computer-accessible storage medium on which the computer program of claim 13 is stored.

**Patentansprüche**

1. Verfahren zur Prüfung der Integrität einer Bohrlochstruktur (2), wobei die Bohrlochstruktur eine Kammer (22) des Bohrlochs von einer angrenzenden Umgebung trennt, wobei das Verfahren folgende Schritte umfasst:

a. Betreiben mindestens eines Ventils (13), um Gas aus der Kammer in einem Strömungsfluss austreten zu lassen und dadurch eine Druckdifferenz zwischen der Kammer und der angrenzenden Umgebung zu erhöhen;
b. Verwenden mindestens eines Sensors (11, 12), um mindestens einen mit dem Strömungsfluss oder einem Zustand des Gases in dem Strömungsfluss verbundenen Parameter zu erfassen; und
c. Bestimmen, ob Gas in die Kammer eingetreten ist, wobei das Gas nach dem Auslassen zumindest eines Teils des Gases und dem Erhöhen der Druckdifferenz in Schritt a in die Kammer eingetreten ist, unter Verwendung des erfassten Parameters, wobei die Bestimmung auf der Menge des aus der Kammer ausgetretenen Gases basiert; und
d. Bestimmen einer Rate des Gaseintritts in die Kammer in Schritt a unter Verwendung des erfassten Parameters auf Grundlage der aus der Kammer ausgetretenen Gasmenge.

2. Verfahren nach Anspruch 1, wobei die Bestimmung in Schritt c und/oder Schritt d während der Durchführung von Schritt a oder nachfolgend durch Analyse erfasster Daten erfolgt.

3. Verfahren nach Anspruch 1 oder 2, wobei Schritt a weiter das Verringern des Gasdrucks in der Kammer umfasst.

4. Verfahren nach einem der vorstehenden Ansprüche, wobei die Bestimmung in Schritt c und/oder Schritt d weiter das Auswerten der aus der Kammer ausgetretenen Gasmenge umfasst.

5. Verfahren nach einem der vorstehenden Ansprüche, wobei die Bestimmung in Schritt c und/oder Schritt d weiter auf der in der Kammer verbleibenden Gasmenge basiert, nachdem die genannte Gasmenge in dem Strömungsfluss aus der Kammer ausgetreten ist.

6. Verfahren nach einem der vorstehenden Ansprüche, wobei das Verfahren weiter das Bestimmen einer Gasmenge umfasst, die durch ein Leck in einer Barriere der Struktur von einem Außenbereich der Struktur in die Kammer eingetreten ist.

7. Verfahren nach Anspruch 6, wobei die Bestimmung der in die Kammer durch das Leck eingetretenen Gasmenge das Berechnen, Bestimmen oder Schätzen einer Masse eines durch den Barrierenabschnitt der Struktur geleckten Gases unter Verwendung einer linearen Kombination einer aktuellen Gasmasse in der Kammer, einer anfänglichen Gasmasse in der Kammer und einer Masse des Gases umfasst, die durch das Ausströmen des Gases aus der Kammer in dem Strömungsfluss erzeugt wird.

8. Verfahren nach einem der vorstehenden Ansprüche, wobei der Schritt des Erhaltens des Parameters oder der Parameter eine Vielzahl von Malen durchgeführt wird.

9. Verfahren nach Anspruch 8, das weiter das Durchführen einer Vielzahl von Berechnungen unter Verwendung des mehrfach erfassten Parameters bzw. der mehrfach erfassten Parameter umfasst, um zu bestimmen, wie sich eine Leckagerate im Laufe der Zeit verändert.

10. Verfahren nach einem der vorstehenden Ansprüche, weiter umfassend:
Berechnen einer Druckantwort für eine theoretische Nullleckagesituation;

Verwenden des Sensors zum Bestimmen mindestens eines Drucks des Gases in dem Strömungsfluss aus der Kammer;

Vergleichen der berechneten Antwort für die theoretische Nullleckagesituation mit der unter Verwendung eines Drucksensors bestimmten Druckantwort; und

Verwenden des Vergleichs zum Bestimmen eines Zustands der Struktur.

11. Verfahren nach einem der vorstehenden Ansprüche, das weiter das Bestimmen einer Flüssigkeitsmenge in der Kammer umfasst.

12. Vorrichtung (1) zur Verwendung beim Prüfen der Integrität einer Bohrlochstruktur (2), wobei die Bohrlochstruktur eine Kammer (22) von einer angrenzenden Umgebungsumgebung trennt, umfassend:

mindestens einen Strömungsleitungsabschnitt zum Führen eines einen Gasstrom aus der Kammer umfassenden Strömungsflusses;

mindestens ein Ventil, das betätigbar ist, um Gas aus der Kammer in dem Strömungsfluss austreten zu lassen und dadurch eine Druckdifferenz zwischen der Kammer und der angrenzenden Umgebung zu erhöhen;

mindestens einen Sensor zum Erfassen mindestens eines mit dem Strömungsfluss oder einem Zustand des Gases in dem Strömungsfluss verbundenen Parameters; und

mindestens eine Bestimmungseinrichtung, die dazu konfiguriert ist, den erfassten Parameter zu verwenden zum: Bestimmen, ob Gas in die Kammer eingetreten ist,

wobei das Gas nach dem Auslassen zumindest eines Teils des Gases aus der Kammer und dem Erhöhen der Druckdifferenz in die Kammer eingetreten ist,

wobei die Bestimmung auf der aus der Kammer ausgetretenen Gasmenge basiert; und Bestimmen einer Rate des Gaseintritts in die Kammer, wobei die Bestimmung auf der aus der Kammer ausgetretenen Gasmenge basiert.

13. Computerprogramm zur Verwendung bei der Durchführung des Verfahrens nach einem der Ansprüche 1 bis 11, wobei das Computerprogramm maschinenlesbare Anweisungen zur Durchführung der Schritte c und d nach Anspruch 1 umfasst.

14. Computervorrichtung (17) zur Verwendung bei der Durchführung des Verfahrens nach einem der Ansprüche 1 bis 11, wobei die Computervorrichtung mindestens einen Prozessor umfasst, wobei der Prozessor dazu konfiguriert ist, das Computerprogramm nach Anspruch 13 auszuführen.

15. Computerzugängliches Speichermedium, auf dem das Computerprogramm nach Anspruch 13 gespeichert ist.

## Revendications

1. Procédé de test d'une intégrité d'une structure (2) de puits de forage, la structure de puits de forage séparant une chambre (22) du puits de forage d'un environnement adjacent, le procédé comprenant les étapes suivantes :

a. la mise en fonctionnement d'au moins une vanne (13), permettant d'évacuer un gaz de la chambre dans un écoulement, pour ainsi augmenter un différentiel de pression entre la chambre et l'environnement adjacent ;
b. l'utilisation d'au moins un capteur (11, 12) pour obtenir au moins un paramètre associé audit écoulement ou à un état de gaz dans ledit écoulement ; et
c. le fait de déterminer si un gaz est entré dans la chambre, le gaz entrant après évacuation d'au moins une partie du gaz et augmentation du différentiel de pression à l'étape a, en utilisant le paramètre obtenu, la détermination étant basée sur la quantité de gaz qui a quitté la chambre ; et
d. la détermination d'un débit d'entrée de gaz dans la chambre à l'étape a, en utilisant le paramètre obtenu, la détermination étant basée sur la quantité de gaz qui a quitté la chambre.

2. Procédé selon la revendication 1, dans lequel la détermination dans l'une ou les deux parmi l'étape c et l'étape d est effectuée au cours de la réalisation de l'étape a, ou ultérieurement par l'analyse des données acquises.

3. Procédé selon la revendication 1 ou la revendication 2, dans lequel l'étape a comprend en outre la réduction de la pression du gaz dans la chambre.

4. Procédé selon l'une quelconque des revendications précédentes, dans lequel la détermination dans l'une ou les deux parmi l'étape c et l'étape d comprend en outre l'évaluation de la quantité de gaz qui a quitté la chambre.

5. Procédé selon l'une quelconque des revendications précédentes, dans lequel la détermination dans l'une ou les deux parmi l'étape c et l'étape d est en outre basée sur la quantité de gaz restant dans la chambre après que ladite quantité du gaz a quitté la chambre dans l'écoulement.

6. Procédé selon l'une quelconque des revendications précédentes, dans lequel le procédé comprend en outre la détermination d'une quantité de gaz qui est entrée dans la chambre par une fuite dans une barrière de la structure, depuis un extérieur de la structure dans la chambre.

7. Procédé selon la revendication 6, dans lequel la détermination de la quantité de gaz qui est entrée dans la chambre par la fuite comprend le calcul, la détermination ou l'estimation d'une masse de gaz qui a fui à travers la portion de barrière dans la structure en utilisant une combinaison linéaire d'une masse actuelle de gaz dans la chambre, d'une masse initiale de gaz dans la chambre et d'une masse du gaz qui est produite par le gaz quittant la chambre dans l'écoulement.

8. Procédé selon l'une quelconque des revendications précédentes, dans lequel l'étape d'obtention du paramètre ou des paramètres est effectuée une pluralité de fois.

9. Procédé selon la revendication 8, qui comprend en outre la réalisation d'une pluralité de calculs en utilisant le paramètre ou les paramètres obtenus la pluralité de fois, pour déterminer comment un taux de fuite change au cours du temps.

10. Procédé selon l'une quelconque des revendications précédentes, qui comprend en outre :
le calcul d'une réponse de pression pour une situation théorique sans fuite ;

l'utilisation du capteur pour déterminer au moins une pression du gaz dans l'écoulement provenant de la chambre ;
la comparaison de la réponse calculée pour la situation théorique sans fuite à la réponse de pression déterminée obtenue en utilisant un capteur de pression ; et
l'utilisation de la comparaison pour déterminer un état de la structure.

11. Procédé selon l'une quelconque des revendications précédentes, qui comprend en outre la détermination d'une quantité de liquide dans la chambre.

12. Appareil (1) destiné à être utilisé pour tester une intégrité d'une structure (2) de puits de forage, la structure de puits de forage séparant une chambre (22) d'un environnement adjacent, l'appareil comprenant :

au moins une section de conduite d'écoulement pour contenir un écoulement comprenant un gaz provenant de la chambre ;
au moins une vanne servant à évacuer un gaz de la chambre dans l'écoulement pour augmenter un différentiel de pression entre la chambre et l'environnement adjacent ;
au moins un capteur pour obtenir au moins un paramètre associé audit écoulement ou à un état de gaz dans ledit écoulement ; et
au moins un dispositif de détermination configuré pour utiliser le paramètre obtenu pour :
déterminer si un gaz est entré dans la chambre,

le gaz entrant après évacuation d'au moins une partie du gaz de la chambre et augmentation du différentiel de pression,
la détermination étant basée sur la quantité de gaz qui a quitté la chambre ; et la détermination d'un débit d'entrée de gaz dans la chambre, la détermination étant basée sur la quantité de gaz qui a quitté la chambre.

13. Programme informatique destiné à être utilisé pour mettre en œuvre le procédé selon l'une quelconque des revendications 1 à 11, dans lequel le programme informatique comprend des instructions lisibles par machine pour réaliser les étapes c et d selon la revendication 1.

14. Dispositif informatique (17) destiné à être utilisé pour mettre en œuvre le procédé selon l'une quelconque des revendications 1 à 11, le dispositif informatique comprenant au moins un processeur, le processeur étant configuré pour mettre en œuvre le programme informatique selon la revendication 13.

15. Support de stockage accessible par ordinateur sur lequel le programme informatique selon la revendication 13 est stocké.

Fig. 1

Fig. 2

Fig. 3

Pressure

Leak Rate Evaluation by Pressure Buildup Analysis

Initial
Pressure

Bleed-down
period

Build-up
period

P2

P1

t1   t2

Time

Fig. 4

Leak Rate Evaluation by Direct Leak Metering Method

Pressure

Initial Pressure

Bleed-down period

Build-up period

Direct leak metering period

Time

Fig. 5

Leak Rate Evaluation by Direct Leak Metering Method

Fig. 6

**EP 3 785 002 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010151144 A1

**Non-patent literature cited in the description**

- Design and Fabrication of a Low Rate Metering Skid to Measure Internal Leak Rates of Pressurized Annuli for Determining Well Integrity Status. Society of Petroleum Engineers, 2008